# EUROPÄISCHE PATENTANMELDUNG

(11) **EP 2 778 035 A1**
(43) Veröffentlichungstag der Anmeldung: **17.09.2014**
(21) Anmeldenummer: 14159251.9
(22) Anmeldetag: 12.03.2014
(51) Int. Cl.: B62M 6/45, B62K 23/04

(54) **Fahrradgriff-System**

(30) Priorität: 15.03.2013 DE 202013002491 U
(71) Anmelder: RTI Sports Vertrieb von Sportartikeln GmbH, 56070 Koblenz (DE)
(72) Erfinder: Krause, Andreas, 56068 Koblenz (DE); Müller, Michael, 56427 Siershahn (DE)
(74) Vertreter: Von Kreisler Selting Werner - Partnerschaft von Patentanwälten und Rechtsanwälten mbB

(57) **Zusammenfassung**

Fahrradgriff-System, mit einem neben einem Griffelement (10) an einem Fahrradlenker (16) befestigbaren Bedienelement zum Bedienen eines elektrischen Unterstützungsmotors. Das Bedienelement weist ein Gehäuse (54) auf, wobei mehrere Schaltelemente (52) in Ausnehmungen (56) des Gehäuses (54) angeordnet sind, innerhalb des Gehäuses (54) je Schaltelement (52) ein Folientaster (60) angeordnet ist, auf den das Schaltelement (52) einwirkt und die Folientaster (60) über eine gemeinsame flexible Leiterbahn (58) miteinander verbunden sind.

## Beschreibung

Die Erfindung betrifft ein Fahrradgriffsystem zur Befestigung an einem Fahrradlenker.

Bei Fahrrädern mit einem elektrischen Hilfsmotor sind am Lenker Bedienelemente zum Steuern des Elektromotors angeordnet. Diese Bedienelemente sind beispielsweise klemmend am Lenker befestigt. Da es sich um Bedienelemente handelt, die unabhängig von dem Griff sind, können diese seitlich neben einem herkömmlichen Fahrradgriff an dem Lenker befestigt werden. Derartige Bedienelemente weisen den Nachteil auf, dass zur Bedienung häufig die Hand vom Fahrradgriff gelöst werden muss. Zumindest ein teilweises Lösen ist erforderlich, um beispielsweise mit dem Daumen einen Schalter an dem Bedienelement zu betätigen. Hierdurch ist die Sicherheit verringert, da beispielsweise beim Überfahren einer Bodenwelle oder dergleichen die Gefahr besteht, dass die Hand vom Lenker abrutscht. Auch ist die Ergonomie derartiger Bedienelemente nicht oder nur geringfügig auf die Handhaltung des Benutzers während des Fahrradfahrens abgestimmt. Des Weiteren weisen bekannte Bedienelemente den Nachteil auf, dass sie relativ breit sind und insofern viel Platz am Lenker benötigen. Dies ist bei der Vielzahl anderer Elemente die am Fahrradlenker angeordnet werden nachteilig.

Aufgabe der Erfindung ist es, ein Fahrradgriffsystem zu schaffen, bei dem das Bedienelement mit mindestens einem elektrischen Schalter zum Steuern eines elektrischen Unterstützungsmotors einfach betätigbar ist und vorzugsweise einen geringen Raumbedarf aufweist.

Die Lösung der Aufgabe erfolgt erfindungsgemäß durch die Merkmale des Anspruchs 1.

Das erfindungsgemäße Fahrradgriffsystem weist ein Griffelement auf, das an bzw. auf einem Fahrradlenker befestigbar ist. Insbesondere seitlich neben dem gegebenenfalls etwas kürzer als herkömmliche Griffe ausgebildete Griffelement ist erfindungsgemäß ein Bedienelement zum Bedienen eines elektrischen Unterstützungsmotors des Fahrrads angeordnet. Das Bedienelement ist in montiertem Zustand vorzugsweise innerhalb des Griffelements angeordnet, so dass vorzugsweise, ohne die Hand von dem Griffelement lösen zu müssen, ein Betätigen des Bedienelements insbesondere mit dem Daumen möglich ist. Durch das Bedienelement ist ein Verändern der Unterstützungsleistung des Unterstützungsmotors möglich. Das Bedienelement weist ein Gehäuse auf, das in mehreren Ausnehmungen mehrere Schaltelemente trägt. Bei den Schaltelementen handelt es sich neben Schaltelementen zur Veränderung der Unterstützungsleistung des Unterstützungsmotors beispielsweise um einen Hauptschalter, einen Lichtschalter und einen Mode-Schalter durch den die Anzeige auf einem Fahrradcomputer verändert werden kann. Die Schaltelemente wirken auf innerhalb des Gehäuses angeordnete Folientaster ein. Hierzu ist innerhalb des Gehäuses je Schaltelement ein Folientaster angeordnet. Ein Betätigen des Schaltelements, d.h. ein Drücken des Schaltelements in das Gehäuse bewirkt somit das Betätigen eines Folientasters. Die Folientaster sind erfindungsgemäß über eine gemeinsame flexible Leiterbahn miteinander verbunden.

Die Folientaster bewirken hierbei bei Einwirkung durch ein Schaltelement einen elektrischen Kontakt. Die Folientaster sind in bevorzugter Ausführungsform derart ausgestaltet, dass es sich um eine Erhebung handelt, die durch das Schaltelement verformt bzw. nach innen gedrückt wird und den elektrischen Kontakt erzeugt. Durch Gehenlassen des Schaltelements geht der elastisch verformte Folientaster in seine Ausgangsstellung bzw. in seine Ausgangsform zurück, so dass der elektrische Kontakt wieder unterbrochen ist. Vorzugsweise kann der Folientaster als eine bspw. sphärische Erhebung ausgebildet sein. Das Vorsehen von über eine gemeinsame flexible Leiterbahn miteinander verbundenen Folientastern hat den Vorteil, dass ein einen geringen Raumbedarf aufweisendes Bedienelement realisiert werden kann.

Besonderes bevorzugt ist es hierbei, dass mindestens drei der Schaltelemente des Bedienelements in Umfangsrichtung hintereinander angeordnet sind. Das Bedienelement umgibt in montiertem Zustand den Lenker zumindest teilweise, so dass die Schaltelemente in einer von dem Lenker wegweisenden Oberseite des Bedienelements in Umfangsrichtung angeordnet sind. Insbesondere sind die Schaltelemente auf der Oberseite des Bedienelements in dem Bereich angeordnet, der in Richtung des Benutzers nach oben weist. Diese Bereiche sind für den Daumen oder den Zeigefinger gut zugänglich auch ohne die Hand vom Griff zu nehmen. Insbesondere sind alle am Bedienelement vorgesehenen Schaltelemente entsprechend in Umfangsrichtung hintereinander angeordnet.

Ferner ist es bevorzugt, dass mindestens drei Folientaster auf einer streifenförmigen Leiterbahn in Längsrichtung hintereinander angeordnet sind. Die Leiterbahn ist hierbei in montiertem Zustand insbesondere rechteckig ausgebildet, so dass auf der Leiterbahn in Längsrichtung hintereinander Folientaster angeordnet sein können. Hierdurch kann der Bauraum deutlich reduziert werden. Besonderes bevorzugt ist es hierbei, dass alle Folientaster auf einer streifenförmigen Leiterbahn in Längsrichtung hintereinander angeordnet sind. Um eine möglichst einfache Ausgestaltung der Schaltelemente realisieren zu können, ist es besonders bevorzugt, dass die entsprechend in Umfangsrichtung des Bedienelements hintereinander angeordneten Schaltelemente mit unmittelbar darunter innerhalb des Gehäuses angeordneten Folientastern zusammenwirken, wobei die Folientaster auf einem einzigen streifenförmigen Leiterbahn hintereinander angeordnet sind.

Innerhalb des Gehäuses sind vorzugsweise Halteelemente wie Haltepins angeordnet. Diese dienen zur Fixierung der Leiterbahn und insbesondere zur Lagefixierung der Folientaster in dem Gehäuse. Die Leiterbahn kann hierbei um insbesondere zylindrische Pins herumgelegt werden, wobei es bevorzugt ist, dass zwischen zwei Pins ein Folientaster angeordnet ist. Zumindest ein Teil der Pins ist somit erfindungsgemäß bevorzugt so angeordnet, dass zwischen diesen ein Folientaster angeordnet ist. Die Pins dienen sodann zur Lagefixierung sowie auch als Widerlager für die Folientaster.

Vorteilhaft bei der Verwendung von Leiterbahnen mit integrierten Folientastern ist, dass diese wasserdicht sind und insbesondere bei Eindringen von Wasser in das Bedienelement kein Kurzschluss entstehen kann. Die Leiterbahn ist in bevorzugter Ausführung der Erfindung durch eine Stecker-Platine mit einem aus dem Gehäuse herausführenden Kabel verbunden. Die Stecker-Platine bei der es sich beispielsweise um einen sechspoligen FFC-Stecker handelt kann vergossen werden, um auch hier das Eindringen von Wasser zu vermeiden. Anstelle des Vorsehens einer Stecker-Platine kann auch eine drahtlose Übertragung der Schaltdaten an einen bspw. in dem Fahrradcomputer oder dem Motor integrierten Empfänger erfolgen. Hierzu ist die Leiterbahn mit einer Sendeeinheit oder gegebenenfalls einer Sende- Empfangseinheit verbunden. Diese kann vorzugsweise in dem Bedienelement angeordnet sein.

Vorzugsweise weist das Bedienelement ein Betätigungselement auf. Das Betätigungselement ist mit einem Lagerelement drehbar verbunden. Bspw. kann das Lagerelement hülsenförmig ausgebildet sein bzw. einen hülsenförmigen Ansatz aufweisen und auf dem Fahrradlenker mittelbar oder unmittelbar fixiert sein. Das Betätigungselement ist sodann auf dem Lagerelement drehbar. Durch ein Verdrehen des Betätigungselements auf oder in dem Lagerelement, d. h. durch ein Verdrehen des Betätigungselements relativ zu dem Lagerelement erfolgt ein Betätigen des elektrischen Schaltelements, das vorzugsweise mindestens einen Folientaster aufweist.

Dies ist erfindungsgemäß dadurch realisiert, dass in einer ersten, besonders bevorzugten Ausführungsform ein Schaltansatz an dem Betätigungselement vorgesehen ist. Durch Verdrehen des Betätigungselements relativ zu dem Lagerelement wirkt der mindestens eine Schaltansatz auf den mindestens einen elektrischen Folientaster ein. Dasselbe erfindungsgemäße Prinzip kann dadurch realisiert werden, dass der mindestens eine Schaltansatz an dem Lagerelement oder insbesondere an dem am Lenker befestigten Halteelement angeordnet ist und den mindestens einen elektrischen Folientaster, auf das der mindestens eine Schalteinsatz einwirkt, an dem Betätigungselement vorgesehen ist. Relevant ist die Relativbewegung zwischen dem mindestens einen Schaltansatz und dem entsprechend mindestens einen Folientaster, wobei durch die Relativbewegung ein Schalten erfolgt. Vorzugsweise kann somit durch ein einfaches Drehen des Bestätigungselements um einen vorgegebenen Winkel bzw. ein Verschwenken des Bestätigungselements der elektrische Unterstützungsmotor hinsichtlich der Unterstützungsleistung gesteuert werden.

Bevorzugt ist es hierbei, dass das Bestätigungselement in zwei unterschiedliche Richtungen auf dem Lagerelement verdreht werden kann und hierdurch die Unterstützungsleistung des Unterstützungsmotors verringert oder erhöht wird. Vorzugsweise sind hierzu zwei Folientaster vorgesehen, wobei der eine Taster zum Erhöhen und der andere Taster zum Erniedrigen der Unterstützungsleistung dient. Auf die beiden Folientaster können ein Schaltansatz oder auch zwei gesonderte Schaltansätze einwirken.

Das Fixierelement, das in einer alternativen Ausführungsform mit dem mindestens einen Schaltansatz verbunden ist, kann Zusatzfunktionen aufweisen. Beispielsweise kann das Fixierelement als Klemmelement ausgebildet sein und zur Fixierung des Lagerelements auf dem Lenker dienen.

In einer besonders bevorzugten Weiterbildung der Erfindung weist das Bestätigungselement ein Gleitelement auf, das drehbar auf dem Lagerelement angeordnet ist. Das Gleitelement bildet zusammen mit dem Lagerelement in dieser Ausführungsform ein Gleitlager. Alternativ können zwischen diesen beiden Elementen auch Wälzkörper wie Kugeln angeordnet sein. Besonders bevorzugt ist, dass das Lagerelement einen zylindrischen Innendurchmesser aufweist, der im Wesentlichen dem Außendurchmesser des Fahrradlenkers entspricht, so dass das Lagerelement auf einfache Weise auf dem Fahrradlenker beispielsweise mit Hilfe eines Klemmmittels wie einer Schelle oder dergleichen fixiert werden kann. Das Fixieren des Lagerelements kann auch durch Verbindung mit dem Griffelement, das sodann auf dem Fahrradlenker fixiert ist, erfolgen. Eine bevorzugte Ausführungsform der die Gleitfläche bildende Außenseite des Lagerelements ist vorzugsweise ebenfalls im Wesentlichen zylindrisch ausgebildet. Entsprechend ist es auch bevorzugt, dass das Gleitelement eine im Wesentlichen zylindrische in Richtung des Lagerelements weisende Innenseite aufweist. Bevorzugt ist es hierbei, dass das Gleitelement einstückig mit dem Bedienelement ausgebildet, insbesondere als Spritzgussteil ausgeführt ist.

Bei einer weiteren bevorzugten Ausführungsform ist der mindestens eine Schaltansatz mit dem Lagerelement oder dem Fixierelement verbunden und ragt in das Bestätigungselement. Hierzu ist es des Weiteren bevorzugt, dass eine Seitenwand des Bestätigungselements mindestens eine schlitzförmige Öffnung aufweist, durch die der mindestens eine Schaltansatz ragt. Bei Vorsehen von mindestens zwei Schaltansätzen ist es bevorzugt, je Schaltansatz eine schlitzförmige Öffnung vorzusehen. Bei dieser bevorzugten Ausführungsform kann das Bestätigungselement entsprechend eines Gehäuses hohl ausgebildet sein, so dass der mindestens eine Schaltansatz zwischen einer Außenwand des Gehäuses und dem Gleitelement angeordnet ist. Hierdurch kann eine kompakte Bauweise realisiert werden.

Um eine möglichst einfache Betätigung des Bedienelements insbesondere ein einfaches Verdrehen des Bestätigungselements auf dem Lagerelement zu ermöglichen weist das Bedienelement eine Schaltmulde auf. Diese ist in montiertem Zustand insbesondere in Richtung des Benutzers ausgerichtet, so dass ohne die Hand von dem Fahrradgriff zu lösen ein Betätigen des Bedienelements mit dem Daumen über die entsprechende Schaltmulde auf einfache Weise möglich ist. Insbesondere ist es bevorzugt, dass der mindestens eine Schaltansatz im Wesentlichen der Schaltmulde gegenüberliegend angeordnet ist. Dies hat insbesondere bei der Ausführungsform, bei der der Schaltansatz mit dem Lagerelement oder dem Fixierelement verbunden ist den Vorteil, dass für den mindestens einen Schaltansatz im Bereich der Schaltmulde kein Raum vorgesehen sein muss. Das Bedienelement kann somit im Bereich der Schaltmulde ergonomisch und platzsparend ausgebildet sein. Im vom Benutzer weg weisenden Bereich des Bedienelements ist in bevorzugter Ausführungsform ausreichend Platz. Anstatt einer Schaltmulde kann bspw. auch ein Schaltansatz, der insbesondere in Richtung des Benutzers weist und insbesondere mit dem Daumen betätigbar ist, vorgesehen sein.

Nachfolgend wird die Erfindung anhand einer bevorzugten Ausführungsform unter Bezugnahme auf die anliegenden Zeichnungen näher erläutert.

Es zeigen:
- Fig. 1: eine schematische Draufsicht eines Fahrradgriffs zusammen mit einem Bedienelement,
- Fig. 2: eine schematische Draufsicht des Lagerelements,
- Fig. 3: eine schematische Seitenansicht des Lagerelements in Richtung des Pfeils III in Fig. 2,
- Fig. 4: eine schematische Schnittansicht des Bedienelements sowie des Lagerelements entlang der Linie IV-IV in Fig. 1
- Fig. 5: eine schematische Schnittansicht des Bedienelements sowie des Lagerelements entlang der Linie IV - IV in Fig. 1 und
- Fig. 6: eine schematische, perspektivische Darstellung einer Leiterbahn mit integrierten Folientastern.

Bei einer bevorzugten Ausführungsform des erfindungsgemäßen Fahrradgriff-Systems ist ein Griffelement 10 vorgesehen. Das Griffelement 10 weist einen Ansatz 12 zum Aufstützen des Handtellers auf und ist über ein Klemmmittel 14 am Fahrradlenker befestigt. Ein derartiges Griffelement ist beispielsweise in EP 1 537 014 beschrieben. Die Führung des Griffelements an einem Lenker 16 erfolgt über das Klemmmittel 14. Auf einer bezogen auf das Griffelement 10 inneren Seite ist ein Betätigungselement 18 angeordnet. Das Betätigungselement 18 ist zumindest teilweise um den Lenker 16 herum verschwenk- bzw. verdrehbar. Hierdurch erfolgt ein Schalten eines elektrischen Schalters zur Steuerung eines über ein Kabel 20 mit dem Bedienelement verbundenen Unterstützungsmotors. Die Verbindung kann auch drahtlos erfolgen. Das Drehen des Betätigungselements 18 erfolgt in dem dargestellten Ausführungsbeispiel mit Hilfe eines in eine Schaltmulde 22 des Betätigungselements eingelegten Daumens und Bewegen des Daumens nach oben oder unten.

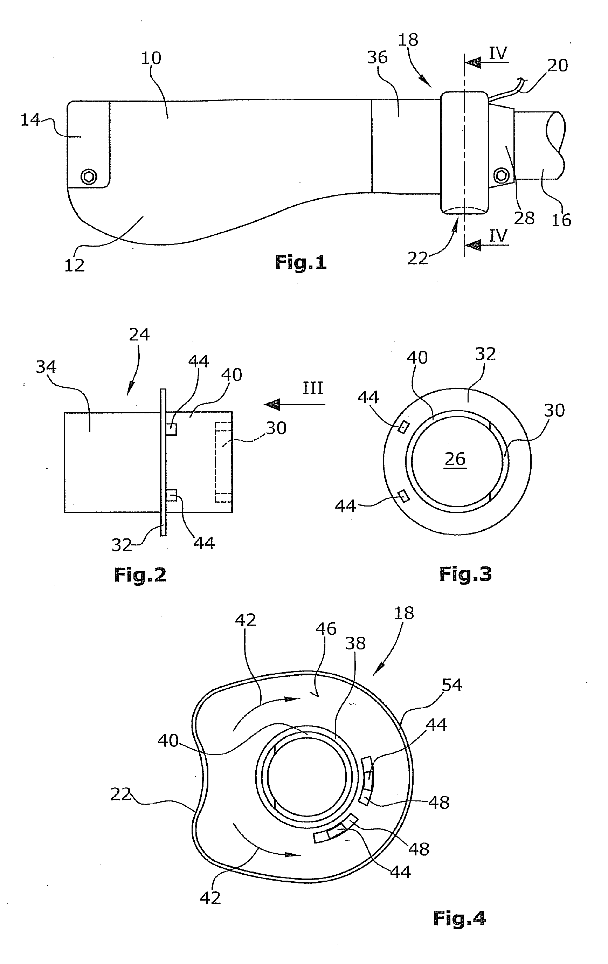

Das Betätigungselement 18 ist auf einem Lagerelement 24 (Fig. 2) angeordnet. Das Lagerelement 24 weist eine den Außendurchmesser des Lenkers 16 aufweisende zylindrische Öffnung 26 (Fig. 3) auf. Mit Hilfe eines als Klemme ausgebildeten Fixierelements 28 (Fig. 1) in Zusammenwirkung mit einer Ausnehmung 30 in dem Lagerelement kann ein klemmendes Fixieren des Lagerrings auf dem Lenker 16 erfolgen. Auf einer in Fig. 2 rechten bzw. inneren Seite eines kreisringförmigen Anlagerings 32 ist das Betätigungselement 18 angeordnet. Ein gegenüberliegender zylindrischer Teil 34 des Lagerelements 24 ragt entweder unmittelbar in das Griffelement 10 oder ist teilweise von einem weiteren im Wesentlichen zylindrischen Griffteil 36 umgeben, so dass der zylindrische Ansatz 34 nur teilweise in das Griffelement 10 ragt. In dem zylindrischen Griffteil 36 können bspw. weitere Elektronikbauteile oder dgl. untergebracht sein.

Das Betätigungselement 18 weist im dargestellten Ausführungsbeispiel einen inneren zylindrischen, ein Gleitelement ausbildenden Ansatz 38 auf. Dieser umgibt den zylindrischen Ansatz 40 des Lagerelements 10, so dass ein Verdrehen bzw. Verschwenken des Bestätigungselements 18 auf dem zylindrischen Ansatz 40 des Lagerelements 24 entsprechend der Pfeile 42 möglich ist. Das Betätigen des Betätigungselements 18 erfolgt im dargestellten Ausführungsbeispiel mit Hilfe des Daumens, der in die Mulde 22 gelegt wird.

An dem kreisförmigen Anlagering 32 des Lagerelements 24 sind im dargestellten Ausführungsbeispiel zwei Schaltansätze 44 vorgesehen, die in das Betätigungselement 18 ragen. Hierzu sind in einer Seitenwand 46 des Betätigungselements 18 Schlitze 48 vorgesehen.

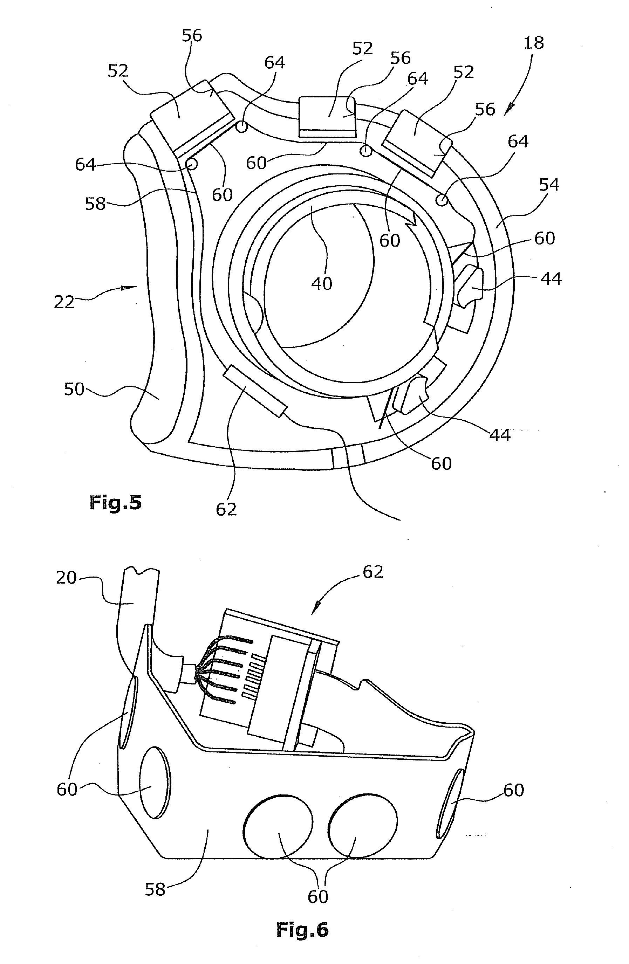

In dem die Schaltmulde 22 ausbildenden Bereich ist ein Schaltelement 50 (Fig. 5) bspw. aus weicherem Kunststoff angeordnet. Weitere Schaltelemente 52 sind in Umfangsrichtung entlang der Außenseite eines das Betätigungselement 18 ausbildenden Gehäuses 54 angeordnet. Die Schaltelemente 52 sind in diversen Ausnehmungen 56 des Gehäuses 54 angeordnet und können zum Schalten nach innen gedrückt werden. Die Schaltelemente 52 sind beispielsweise als ein Hauptschalter, ein Lichtschalter und ein Mode-Schalter zum Steuern eines Fahrradcomputers ausgebildet.

Innerhalb des Gehäuses 54 sind mehrere durch eine Leiterbahn 58 miteinander verbundene Folientaster 60 vorgesehen. Die Folientaster 60 sind hierbei insbesondere in die Leiterbahn 58 integriert, was insbesondere aus Fig. 6 ersichtlich ist. Entsprechend der Schaltelemente 52 verläuft die Leiterbahn 58 zusammen mit den Folientastern 60 in Umfangsrichtung des Gehäuses 54. In dem der Schaltmulde 22 gegenüberliegenden Bereich sind ebenfalls zwei Folientaster 60 angeordnet, auf die die Schaltansätze 44 beim Verdrehen des Betätigungselements 18 einwirken.

Die Leiterbahn 58 mit den integrierten Folientastern 60 ist streifenförmig ausgebildet, so dass sämtliche Folientaster 60 in Längsrichtung hintereinander angeordnet sind. Die Leiterbahn 58 ist mit einer Steckplatine 62 verbunden, die in einem bevorzugten Ausführungsbeispiel über einen sechspoligen Stecker mit dem Kabel 20 verbunden ist. Die Leiterbahn wird in das Gehäuse 54 eingelegt, wobei die einzelnen Folientaster 60 durch insbesondere einstückig mit dem Gehäuse ausgebildete Pins 64 fixiert sind. Durch Drücken eines als Tastschalter ausgebildeten Schaltelements 52 wird der entsprechend innerhalb des Gehäuses unter dem Schaltelement 52 angeordnete Folientaster betätigt und ein entsprechendes elektrisches Signal erzeugt bzw. ein elektrischer Kontakt hergestellt.

Ein Verdrehen des Bestätigungselements 18 bewirkt ein Verdrehen der mit dem Betätigungselement 18 verbundenen Leiterbahn 58. Hierdurch gelangt einer der beiden Folientaster 60 mit einem der beiden Schaltansätze 44 in Kontakt, wobei die Schaltansätze 44 aufgrund ihrer Verbindung mit dem Lagerelement 24 stationär sind. Hierdurch kann ein elektrischer Kontakt ausgelöst und ein entsprechendes Schaltsignal erzeugt werden.

## Patentansprüche

1. Fahrradgriff-System, mit
einem neben einem Griffelement (10) an einem Fahrradlenker (16) befestigbaren Bedienelement zum Bedienen eines elektrischen Unterstützungsmotors,
**dadurch gekennzeichnet, dass**
das Bedienelement ein Gehäuse (54) aufweist, wobei mehrere Schaltelemente (52) in Ausnehmungen (56) des Gehäuses (54) angeordnet sind,
innerhalb des Gehäuses (54) je Schaltelement (52) ein Folientaster (60) angeordnet ist, auf den das Schaltelement (52) einwirkt und
die Folientaster (60) über eine gemeinsame flexible Leiterbahn (58) miteinander verbunden sind.

2. Fahrradgriffsystem nach Anspruch 1, **dadurch gekennzeichnet, dass** mindestens drei, insbesondere alle Schaltelemente (52) des Bedienelements in Umfangsrichtung hintereinander angeordnet sind.

3. Fahrradgriffsystem nach Anspruch 1 oder 2, **dadurch gekennzeichnet, dass** mindestens drei insbesondere alle Folientaster (60) auf der insbesondere streifenförmigen ausgebildeten Leiterbahn (58) in Längsrichtung hintereinander angeordnet sind.

4. Fahrradgriffsystem nach einem der Ansprüche 1 bis 3, **dadurch gekennzeichnet, dass** in dem Gehäuse (54) Halteelemente (64) insbesondere Haltepins zur Fixierung der Leiterbahn (58) insbesondere zur Lagefixierung der Folientaster (60) vorgesehen sind.

5. Fahrradgriffsystem nach einem der Ansprüche 1 bis 4, **dadurch gekennzeichnet, dass** die Leiterbahn (58) über eine Steckplatine (62) mit einem aus dem Gehäuse (54) herausführenden Kabel (20) verbunden ist

6. Fahrradgriffsystem nach einem der Ansprüche 1 bis 5, **dadurch gekennzeichnet, dass** das Bedienelement ein auf einem Lagerelement (24) drehbares Betätigungselement (18) aufweist und dass mindestens ein Schaltansatz (44) an dem Betätigungselement (18), dem Lagerelement (24) oder einem an dem Lenker (16) befestigbares Halteelement (28) vorgesehen ist, wobei der mindestens eine Schaltansatz (44) durch Verdrehen des Betätigungselements (18) relativ zum Lagerelement (24) auf einen Folientaster (60) einwirkt.

7. Fahrradgriffsystem nach Anspruch 6, **dadurch gekennzeichnet, dass** das Betätigungselement (18) das insbesondere zylindrisch ausgebildete Lagerelement (24) umgibt und vorzugsweise ein insbesondere zylindrisch ausgebildetes, auf dem Lagerelement (24) drehbar angeordnetes Gleitelement (38) aufweist.

8. Fahrradgriffsystem nach Anspruch 6 oder 7, **dadurch gekennzeichnet, dass** der mindestens eine Schaltansatz (44) mit dem Lagerelement (24) oder dem Halteelement (28) verbunden ist und in das Betätigungselement (18) ragt.

9. Fahrradgriffsystem Anspruch 7 oder 8, **dadurch gekennzeichnet, dass** die Folientaster (60) radial zwischen dem Gleitelement (38) und einer Außenwand (52) des Betätigungselements (18) angeordnet sind.

10. Fahrradgriffsystem nach einem der Ansprüche 6 bis 9, **dadurch gekennzeichnet, dass** das Betätigungselement (18) zum Verdrehen gegenüber dem Lagerelement (24) eine Schaltmulde (22) aufweist.

11. Fahrradgriffsystem nach Anspruch 10, **dadurch gekennzeichnet, dass** der mindestens eine Schaltansatz (44) im Wesentlichen der Schaltmulde (22) gegenüberliegend angeordnet ist.
